# EUROPÄISCHE PATENTSCHRIFT

(11) **EP 3 943 891 B1**
(45) Veröffentlichungstag und Bekanntmachung des Hinweises auf die Patenterteilung: **09.10.2024**
(21) Anmeldenummer: 21180035.4
(22) Anmeldetag: 17.06.2021
(51) Int. Cl.: G01C 21/36

(54) **KONTAKTANALOGE ANZEIGE ZUR VORBEREITUNG EINES NAVIGATIONSMANÖVERS**
CONTACT ANALOGUE DISPLAY FOR PREPARING A NAVIGATION MANOEUVER
AFFICHAGE CONTACT ANALOGIQUE DESTINÉ À LA PRÉPARATION D'UNE MANOEUVRE DE NAVIGATION

(30) Priorität: 22.07.2020 DE 102020209267
(43) Veröffentlichungstag der Anmeldung: 26.01.2022
(73) Patentinhaber: Volkswagen Aktiengesellschaft, 38440 Wolfsburg (DE)
(72) Erfinder: Kunze, Dr. Alexander, 13585 Berlin (DE); Wittkämper, Michael, 38106 Braunschweig (DE); Tebaibi, Yannis, 38106 Braunschweig (DE)

(56) Entgegenhaltungen:
- DE-A1- 102012 215 038
- DE-A1- 102012 216 144
- DE-A1- 102016 203 080

## Beschreibung

Die Erfindung betrifft ein Verfahren zum Ermitteln und Ausgeben von kontaktanalogen Anzeigeelementen zum Vorbereiten eines Manövers eines Fahrzeugs sowie eine Vorrichtung, die dazu ausgebildet ist, dieses Verfahren auszuführen. Die Erfindung betrifft ferner ein zum Durchführen dieses Verfahrens eingerichtetes Fahrzeug und ein computerlesbares Speichermedium, das Befehle zur Ausführung des Verfahrens umfasst.

Bei bekannten Verfahren zur Anzeige von Navigationsinformationen, beispielsweise auf in das Armaturenbrett eingebauten Displays oder dergleichen, ist in der Regel ein Abwenden des Blicks von der Straße, insbesondere relevanten Manöverpunkten, erforderlich, um Navigationsinformationen wahrnehmen zu können. Zudem müssen die dargestellten Informationen von der Fahrperson noch hinsichtlich auf eine aktuelle Umgebung kognitiv verarbeitet werden, beispielsweise indem die Inhalte einer Karte mit der tatsächlichen Fahrumgebung abgeglichen werden. Kontaktanaloge Anzeigen, die beispielsweise durch im Stand der Technik bekannte Augmented-Reality-Head-Up-Displays erzeugt werden, können deshalb prinzipiell helfen, die Fahrsicherheit zu verbessern. Mittels solcher Augmented-Reality-Head-Up-Displays können Anzeigeelemente dem Fahrer in seine aktuelle Sicht so eingeblendet werden, dass der Fahrer das Gefühl hat, sie seien fester Bestandteil der Umwelt.

Die Druckschrift DE 10 2012 215 038 A1 beschreibt eine Vorrichtung zum Bereitstellen von Navigationsinformationen. Ein Teil der Navigationsinformationen wird dabei so bereitgestellt, dass sie sich an einem Ort zu befinden scheint, der sich in einer bestimmten Entfernung vor dem auszuführenden Fahrmanöver befindet.

Die Druckschrift DE 10 2016 203 080 A1 beschreibt ein Verfahren zum Betreiben eines Head-Up-Displays für ein Kraftfahrzeug, wobei in Abhängigkeit von aktuellen Fahrdaten mittels des Head-Up-Displays eine virtuelle Leitplanke in das Sichtfeld des Fahrers projiziert wird.

Die Druckschrift DE 10 2012 216 144 A1 schlägt eine kontaktanaloge Anzeige von Navigationsinformationen vor, wobei ein virtueller Pfeil an dem Punkt auf der Straße, an dem das Fahrzeug abbiegen soll, platziert wird. Zusätzlich bereiten weitere statische Anzeigen den Fahrer auf das Manöver vor.

Aus der Druckschrift DE 10 2018 203 927 A1 ist ein weiteres Verfahren für eine kontaktanaloge Anzeige von Manöverinformationen bekannt. Hier wird die Manövermarkierung in Form eines virtuellen Pfeils erzeugt, der am Ausführungsort des Manövers senkrecht auf einer vom Fahrzeug zu befahrenden Fahrspur stehend dargestellt wird. Auch diese Druckschrift schlägt eine zusätzliche statische Anzeige zur Vorbereitung des Fahrers auf das Manöver vor.

Die Nutzer müssen bei den bekannten Verfahren nachteilig zwischen kontaktanalogen und statischen Anzeigen wechseln, um auf das Manöver vorbereitet zu sein, was zu Ablenkungen und damit zu einer Verringerung der Fahrsicherheit führt. Gleichzeitig würde jedoch eine ausschließliche Verwendung der bekannten virtuellen Manöverpfeile zu einer späten Sichtbarkeit des zukünftigen Manövers führen und dadurch eine Vorbereitung unterbinden. Liegt beispielsweise eine Kreuzung, an der ein Abbiegemanöver durchgeführt werden soll, hinter einer Kurve, so werden die Manöverpfeile erst sehr spät für den Fahrer sichtbar.

Der Erfindung liegt nun die Aufgabe zugrunde, die Nachteile des Standes der Technik zu überwinden und ein Verfahren zur Steuerung einer kontaktanalogen Anzeige von Navigationsinformationen bereitzustellen, mit dem die Fahrsicherheit eines Fahrzeugs verbessert werden kann.

Die erfindungsgemäße Aufgabe wird gelöst durch die Gegenstände der unabhängigen Patentansprüche. Bevorzugte Weiterbildungen sind Gegenstand der Unteransprüche.

Erfindungsgemäß ist ein Verfahren zum Vorbereiten eines Navigationsmanövers eines Fahrzeugs vorgesehen, das eine kontaktanaloge Anzeige von Navigationsinformationen einer Augmented-Reality-Display-Vorrichtung steuert.

Als kontaktanalog werden im Rahmen der vorliegenden Offenbarung Anzeigeelemente bezeichnet, die dem Fahrer in seine aktuelle Sicht so eingeblendet werden, dass er das Gefühl hat, sie seien fester Bestandteil der Umwelt. Eine Augmented-Reality-Display-Vorrichtung ist im Rahmen der vorliegenden Offenbarung eine Vorrichtung, die kontaktanaloge Anzeigeelemente ausgeben kann, so dass sie dem Fahrer in seine aktuelle Sicht so eingeblendet werden, dass er sie als Bestandteil der Umwelt wahrnimmt. Die Vorrichtung ist dabei in der Lage, das virtuelle Anzeigeelement scheinbar an einem bestimmten Ort im dreidimensionalen Raum der realen Welt anzuordnen. Eine Augmented-Reality-Display-Vorrichtung in einem Fahrzeug ist besonders bevorzugt ein Head-Up-Display des Fahrzeugs, wobei das Head-Up-Display dazu ausgebildet ist, kontaktanaloge Anzeigeelemente auszugeben. Ferner bevorzugt ist eine Augmented-Reality-Display-Vorrichtung eine Augmented-Reality-Brille, die vom Fahrer des Fahrzeugs getragen wird und in der Lage ist, mit dem Fahrzeug zu kommunizieren. Ein Manöver bezeichnet einen vom Fahrer vorgenommenen Eingriff in die Quer- und/oder Längsführung des Fahrzeugs, insbesondere eine Geschwindigkeits- und/oder Richtungsänderung des Fahrzeugs. Ein Manöver wird beispielsweise vom Fahrer des Fahrzeugs ausgeführt, um das Fahrzeug auf der gewünschten Route zu halten. Beispielsweise ist ein Abbiegen des Fahrzeugs ein Manöver.

In einem ersten Schritt des erfindungsgemäßen Verfahrens erfolgt ein Bestimmen eines Zielmanövers und eines Manöverpunktes des Zielmanövers. Das erfindungsgemäße Zielmanöver ist dabei bevorzugt das zeitlich nächste Manöver, besonders bevorzugt das zeitlich nächste Navigationsmanöver einer vorher bestimmten Route, wobei diese Route eine Vielzahl von Navigationsmanövern aufweist. Das Manöver kann jedoch auch auf empfangenen Umfeld-Informationen, beispielsweise durch Verkehrsfunk oder Sensoren des Fahrzeugs, beruhen. Der Manöverpunkt bezeichnet im Rahmen dieser Offenbarung den Ausführungsort des Zielmanövers. Ist das Zielmanöver beispielsweise ein Abbiegen nach rechts in einem 90°-Winkel, dann ist der Manöverpunkt der Ort, an dem das Fahrzeug um 90° nach rechts gewendet werden muss, um das Zielmanöver durchzuführen, insbesondere der Punkt an dem der Fahrer beginnen muss, einen Lenkradeinschlag vorzunehmen.

In einem weiteren Schritt des erfindungsgemäßen Verfahrens wird ein erster Anzeigepunkt mit einem ersten festen Abstand von dem Manöverpunkt und auf einem von dem Fahrzeug befahrenen Fahrweg ermittelt. Bevorzugt wird der erste Anzeigepunkt so bestimmt, dass er sich im Fahrweg des Fahrzeugs auf der Straße befindet. Erfindungsgemäß wird der erste Anzeigepunkt auf einem Fahrweg zwischen einer aktuellen Fahrzeugposition und dem Manöverpunkt ermittelt. Der erste Anzeigepunkt wird bevorzugt in der Mitte einer von dem Fahrzeug befahrenen Spur oder Fahrbahn ermittelt. Der erste Anzeigepunkt wird mit einem ersten festen Abstand von dem Manöverpunkt ermittelt, sprich die Relativlage von dem ersten Anzeigepunkt und dem Manöverpunkt ist unveränderlich. Ein erster Anzeigepunkt ist im Rahmen des erfindungsgemäßen Verfahrens somit eine feste Ortsangabe im dreidimensionalen Raum der realen Welt, an der ein erstes kontaktanaloges Anzeigeelement, das Navigationsinformationen darstellt, eingeblendet werden soll.

Der erste feste Abstand wird mit Hilfe der Geschwindigkeit des Fahrzeugs und der Position des Fahrzeugs bestimmt. Bei einer hohen Geschwindigkeit wird der erste feste Abstand größer bestimmt als bei einer geringeren Geschwindigkeit, um dem Fahrer genug Zeit zu geben, sich auf das Zielmanöver vorzubereiten.

In einem weiteren Schritt des erfindungsgemäßen Verfahrens erfolgt ein Generieren und Ausgeben eines ersten kontaktanalogen Anzeigeelements zur Anzeige durch die Augmented-Reality-Display-Vorrichtung auf dem ersten Anzeigepunkt. Mit anderen Worten wird das erste kontaktanaloge Anzeigeelement, das in diesem Verfahrensschritt generiert und ausgegeben wurde, durch die Augmented-Reality-Display-Vorrichtung so angezeigt, dass der Fahrer des Fahrzeugs es auf der Straße an dem Ort liegend wahrnimmt, der durch den ersten Anzeigepunkt definiert ist. Das erste kontaktanaloge Anzeigeelement enthält bevorzugt Navigationsinformationen, die das Zielmanöver beschreiben, und wird ortsfest an dem ersten Anzeigepunkt dargestellt. Bevorzugt ist das erste kontaktanaloge Anzeigeelement durch zumindest einen Pfeil gegeben, der eine zum Zielmanöver korrespondierende Richtung angibt und ortsfest auf der Straße zu liegen oder zu stehen scheint. Es sind jedoch auch Variationen des Pfeils in Aussehen, räumlicher Platzierung und Drehung bevorzugt.

Im erfindungsgemäßen Verfahren wird in einem weiteren Schritt ein zweiter Anzeigepunkt mit einem zweiten festen Abstand von dem Manöverpunkt auf einem von dem Fahrzeug befahrenen Fahrweg ermittelt. Bevorzugt wird der zweite Anzeigepunkt so bestimmt, dass er sich im Fahrweg des Fahrzeugs auf der Straße befindet, mit einem Abstand von dem Manöverpunkt, der dem zweiten festen Abstand entspricht. Erfindungsgemäß wird der zweite Anzeigepunkt auf einem Fahrweg zwischen einer aktuellen Fahrzeugposition und dem Manöverpunkt ermittelt. Der zweite Anzeigepunkt wird bevorzugt in der Mitte einer von dem Fahrzeug befahrenen Spur oder Fahrbahn ermittelt. Der zweite Anzeigepunkt wird mit einem zweiten festen Abstand von dem Manöverpunkt ermittelt, sprich die Relativlage von dem zweiten Anzeigepunkt und dem Manöverpunkt ist unveränderlich. Ein zweiter Anzeigepunkt ist im Rahmen des erfindungsgemäßen Verfahrens somit eine feste Ortsangabe im dreidimensionalen Raum der realen Welt, an der ein zweites kontaktanaloges Anzeigeelement, das Navigationsinformationen darstellt, eingeblendet werden soll.

In einem weiteren Schritt des erfindungsgemäßen Verfahrens erfolgt ein Generieren und Ausgeben eines zweiten kontaktanalogen Anzeigeelements zur Anzeige durch die Augmented-Reality-Display-Vorrichtung auf dem zweiten Anzeigepunkt. Mit anderen Worten wird das zweite kontaktanaloge Anzeigeelement, das in diesem Verfahrensschritt generiert und ausgegeben wird, durch die Augmented-Reality-Display-Vorrichtung so angezeigt, dass der Fahrer des Fahrzeugs es auf der Straße an dem Ort liegend wahrnimmt, der durch den zweiten Anzeigepunkt definiert ist. Das zweite kontaktanaloge Anzeigeelement enthält bevorzugt Navigationsinformationen, die das Zielmanöver beschreiben, und wird ortsfest an dem zweiten Anzeigepunkt dargestellt. Bevorzugt ist das zweite kontaktanaloge Anzeigeelement durch zumindest einen Pfeil gegeben, der eine zum Zielmanöver korrespondierende Richtung angibt und ortsfest auf der Straße zu liegen oder zu stehen scheint. Es sind jedoch auch Variationen des Pfeils in Aussehen, räumlicher Platzierung und Drehung bevorzugt.

Erfindungsgemäß ist der zweite feste Abstand dabei geringer als der erste feste Abstand. Ferner wird der erste feste Abstand basierend auf einer Position und einer Geschwindigkeit des Fahrzeugs ermittelt. Mit anderen Worten wird das zweite Anzeigeelement näher an dem Manöverpunkt angezeigt als das erste Anzeigeelement. Somit wird der Fahrer durch das erste und zweite Anzeigeelement beim Annähern an den Manöverpunkt auf das bevorstehende Manöver vorbereitet. Es erfolgt somit eine kontinuierliche Nutzer-Maschinen-Interaktion, um die Fahrsicherheit zu erhöhen. Durch die Anzeige von zumindest zwei Anzeigeelementen auf zwei Anzeigepunkten mit verschiedenen Abständen zum Manöverpunkt erfolgt vorteilhaft eine Navigationsunterstützung mit Checkpoint-Charakter, die den Fahrer diskontinuierlich unterstützt. Somit wird der Fahrer in fortgesetzter Weise auf das bevorstehende Manöver hingewiesen, muss jedoch im Unterschied zu einer kontinuierlichen Darstellung veränderlicher Anzeigeelemente keine graduellen Veränderungen der Anzeigeelemente beachten.

Das erfindungsgemäße Verfahren ermöglicht es dem Fahrer des Fahrzeugs somit vorteilhaft, sich mit Hilfe der kontaktanalog dargestellten Navigationsinformationen auf das Zielmanöver vorzubereiten. Die Darstellung der gewünschten Informationen im Sichtfeld des Fahrers verbessert die Fahrsicherheit erheblich, da hierdurch kein Abwenden des Kopfes zur Informationsbeschaffung mehr nötig ist. Zudem reduziert die kontaktanaloge Darstellung, also die Einbindung der virtuellen Informationen in die reale Umwelt, die nötigen kognitiven Transferleistungen. Der erfindungsgemäße Checkpoint-Charakter, der durch mehrere hintereinanderliegende Anzeigeelemente erzeugt wird, trägt maßgeblich dazu bei, die Vorbereitung auf das Zielmanöver nur mit Hilfe der kontaktanalogen Elemente zu ermöglichen. Nachteile des Standes der Technik, beispielsweise die späte Sichtbarkeit eines nur auf dem Manöverpunkt angezeigten virtuellen Manöverpfeils, werden durch das erfindungsgemäße Verfahren überwunden.

Weiterhin ist vorgesehen, dass das erste kontaktanaloge Anzeigeelement in einem ersten Zeitabschnitt und das zweite kontaktanaloge Anzeigeelement in einem zweiten Zeitabschnitt abschnittsweise nach dem ersten Zeitabschnitt ausgegeben werden. Bevorzugt werden dabei beide Anzeigeelemente gleichzeitig ausgegeben und dann die Ausgabe des ersten Anzeigeelements früher beendet als die des zweiten Anzeigeelements. Ferner bevorzugt wird die Ausgabe des ersten Anzeigeelements zu einem ersten Zeitpunkt gestartet. Ebenfalls bevorzugt wird zu einem ersten Zeitpunkt die Ausgabe des ersten Anzeigeelements gestartet. Zu einem zweiten Zeitpunkt, der nach dem ersten Zeitpunkt liegt, wird dann die Ausgabe des zweiten Anzeigeelements gestartet. Zu einem dritten Zeitpunkt, der nach dem zweiten Zeitpunkt liegt, wird die Ausgabe des ersten Anzeigeelements beendet und zu einem vierten Zeitpunkt, der nach dem dritten Zeitpunkt liegt, wird die Ausgabe des zweiten Anzeigeelements beendet. Wesentlich ist, dass die Anzeigeelemente teilweise zeitlich nacheinander angezeigt werden und ein gewisser zeitlicher Überlapp der örtlich getrennten Darstellungen besteht.

Auch dadurch ergibt sich der vorteilhafte Checkpoint-Effekt im erfindungsgemäßen Verfahren. Im Gegensatz zum Stand der Technik, der vorschlägt, die kontaktanalogen Anzeigeelemente permanent auszugeben, werden so kritische Verdeckungen oder Ablenkungen verhindert. Gleichzeitig ermöglicht die fortgesetzte Ausgabe separater Anzeigeelemente entlang eines Fahrwegs des Fahrzeugs ein stetiges Vorbereiten des Fahrers auf das Manöver.

Eine bevorzugte Ausgestaltung des erfindungsgemäßen Verfahrens sieht vor, eine Vielzahl von Anzeigepunkten mit jeweiligem festen Abstand vom Manöverpunkt zu ermitteln und zugehörige kontaktanaloge Anzeigeelemente zu generieren und auszugeben, wobei die Anzeigepunkte jeweils eine vorbestimmte Distanz zueinander aufweisen. Mit anderen Worten sieht diese weitere bevorzugte Ausgestaltung des erfindungsgemäßen Verfahrens vor, mehr als zwei Anzeigepunkte mit dazugehörigen Anzeigeelementen zu erzeugen, wobei sich jeder Anzeigepunkt mit einem festen Abstand vom Manöverpunkt im Fahrweg des Fahrzeugs auf der Straße befindet. Somit ist der feste Abstand jedes nachfolgenden Anzeigepunkts (beispielsweise dritter Anzeigepunkt) zum Manöverpunkt kleiner als der feste Abstand des vorangegangenen Anzeigepunkts (beispielsweise zweiter Anzeigepunkt) zum Manöverpunkt. Die festen Abstände der Anzeigepunkte zum Manöverpunkt sind dabei jeweils voneinander verschieden, wodurch sich räumliche Distanzen zwischen den jeweiligen Anzeigepunkten ergeben, die vorbestimmt werden.

In einer ersten bevorzugten Durchführungsform sind die Distanzen zwischen verschiedenen Anzeigepunkten konstant. Beispielsweise werden Anzeigepunkte fortlaufend mit Abständen von 50 m zueinander auf dem Fahrweg des Fahrzeugs ermittelt. Ebenfalls bevorzugt werden die Distanzen zwischen den Anzeigepunkten mit Hilfe der Geschwindigkeit des Fahrzeugs bestimmt. Bei einer hohen Geschwindigkeit werden entsprechend die Distanzen größer, um dem Fahrer genug Zeit zu geben, das nachfolgende Anzeigeelement wahrzunehmen. Somit kann eine Konfusion des Fahrers durch nur kurz auftauchende Anzeigeelemente vermieden werden. Ferner bevorzugt werden die Distanzen mit Hilfe der Position des Fahrzeugs, besonders bevorzugt in Abhängigkeit von dessen Abstand zum Manöverpunkt, bestimmt. Die Distanzen zwischen den Anzeigepunkten sind bevorzugt geringer, wenn der Abstand des Fahrzeugs vom Manöverpunkt zum Zeitpunkt der Berechnung kleiner ist. Besonders bevorzugt werden die Distanzen mit Hilfe der Geschwindigkeit des Fahrzeugs und der Position des Fahrzeugs bestimmt.

Mittels dieser bevorzugten Ausgestaltung des erfindungsgemäßen Verfahrens wird der vorteilhafte Checkpoint Effekt des Verfahrens noch verstärkt. Im Gegensatz zum Stand der Technik, der vorschlägt, die kontaktanalogen Anzeigeelemente permanent auszugeben, werden so kritische Verdeckungen oder Ablenkungen verhindert. Gleichzeitig ermöglicht die fortgesetzte Ausgabe separater Anzeigeelemente entlang eines Fahrwegs und für eine ausreichende Zeitspanne des Fahrzeugs ein stetiges Vorbereiten des Fahrers auf das bevorstehende Manöver.

In einer weiteren bevorzugten Ausgestaltung werden in dem erfindungsgemäßen Verfahren zusätzlich eine variable Entfernung von Manöverpunkt und Fahrzeug ermittelt und für jedes Anzeigeelement ein Projektionswinkel in Abhängigkeit der ermittelten Entfernung und des jeweiligen festen Abstands zum Manöverpunkt ermittelt. Der Projektionswinkel wird dabei bevorzugt so ermittelt, dass das Anzeigeelement ortsfest auf dem Anzeigepunkt mit festem Abstand zum Manöverpunkt angezeigt wird, sprich als ein variabler Projektionswinkel.

Die variable Entfernung ist dabei die Entfernung des Fahrzeugs vom Manöverpunkt, die aufgrund der Bewegung des Fahrzeugs variabel ist, also von der Geschwindigkeit des Fahrzeugs abhängt. Bevorzugt wird die variable Entfernung des Fahrzeugs anhand zumindest einer Position und einer Geschwindigkeit des Fahrzeugs ermittelt. Die Position des Fahrzeugs wird dabei bevorzugt durch Sensordaten direkt ermittelt. Ferner bevorzugt wird die Position des Fahrzeugs durch Sensordaten und relativ zu zumindest einer anderen Position ermittelt. Wird die Position durch Sensordaten direkt ermittelt, so wird sie bevorzugt mit Hilfe von GPS-Daten ermittelt. Wird die Position relativ zu zumindest einer anderen Position ermittelt, so wird sie bevorzugt mit Hilfe eines Abstandssensors ermittelt. Bevorzugt beinhaltet ein Abstandssensor einen Laser. Die zumindest eine andere Position, aufgrund derer die Position des Fahrzeugs relativ ermittelt wird, ist bevorzugt der Manöverpunkt, der Anzeigepunkt oder ein fester Abstand eines Anzeigepunktes. Die andere Position kann auch eine Markierung des Manöverpunktes, wie beispielsweise ein Straßenschild, sein.

Der Projektionswinkel ist der Winkel, den die Augmented-Reality-Display-Vorrichtung des Fahrzeugs einstellt, um das jeweilige kontaktanaloge Anzeigeelement aus Sicht des Fahrers auf den entsprechenden Anzeigepunkt zu projizieren. Der Projektionswinkel wird bevorzugt mit Hilfe der Entfernung des Fahrzeugs vom jeweiligen Anzeigepunkt berechnet, die sich aus der variablen Entfernung und dem festen Abstand des jeweiligen Anzeigepunktes vom Manöverpunkt ergibt. Ferner bevorzugt fließt zusätzlich die Höhe der Augmented-Reality-Display-Vorrichtung über der Straße mit in die Berechnung des Projektionswinkels ein. Es sind jedoch auch andere Lösungen denkbar, den Projektionswinkel zu ermitteln.

In dieser weiteren bevorzugten Ausgestaltung des erfindungsgemäßen Verfahrens wird ferner bevorzugt jedes Anzeigeelement mit einem Projektionswinkel gleich einem ersten vorbestimmten Grenzwinkel eingeblendet und mit einem Projektionswinkel gleich einem zweiten vorbestimmten Grenzwinkel ausgeblendet. Bevorzugt sind dabei jedem Anzeigeelement ein erster vorbestimmter Grenzwinkel und ein zweiter vorbestimmter Grenzwinkel zugeordnet. Besonders bevorzugt unterscheiden sich die Grenzwinkel eines Anzeigeelements von denen anderer Anzeigeelemente. Ferner bevorzugt besitzt jedes Anzeigeelement dieselben vorbestimmten Grenzwinkel. Die Grenzwinkel stellen somit eine einfach zu implementierende Steuergröße zur Kontrolle der Anzeige der Anzeigeelemente dar und sind in der Berechnung ferner vorteilhaft in einfacher Weise an die variable Entfernung vom Manöverpunkt und den festen Abstand der Anzeigeelemente koppelbar.

In weiterer bevorzugter Ausgestaltung der Erfindung ist vorgesehen, dass für jedes Anzeigeelement eine dem jeweiligen festen Abstand zum Manöverpunkt zugeordnete Abstandsangabe ausgegeben wird. Die Abstandsangabe ist dabei bevorzugt eine numerische Angabe, die dem festen Abstand des dem zugeordneten Anzeigeelement zugehörigen Anzeigepunktes zum Manöverpunkt entspricht. Die Abstandsangabe wird dabei bevorzugt wie auch das zugeordnete Anzeigeelement kontaktanalog ausgegeben. Mit anderen Worten wird die Abstandsangabe durch die Augmented-Reality-Display-Vorrichtung so angezeigt, dass der Fahrer des Fahrzeugs sie als auf der Straße im Fahrweg des Fahrzeugs neben dem jeweiligen Anzeigeelement liegend oder stehend wahrnimmt.

Bevorzugt ist die Abstandsangabe durch eine Längenangabe gegeben. Ferner bevorzugt enthält die Abstandsangabe eine Angabe, die dem jeweiligen festen Abstand zum Manöverpunkt zugeordnet werden kann. Eine solche Angabe ist bevorzugt ein Teil eines Count-Downs. Beispielsweise wird bevorzugt dem kleinsten festen Abstand zum Manöverpunkt eine 1, dem nächstgrößeren eine 2, und so weiter, zugeordnet. Ist die Abstandsangabe durch eine Längenangabe gegeben, so ist diese bevorzugt durch die variable Entfernung des Fahrzeugs zum Manöverpunkt gegeben. Besonders bevorzugt ist die Längenangabe der jeweilige feste Abstand des Anzeigepunktes, an dem die Abstandsangabe zusammen mit dem ihr zugeordneten Anzeigeelement angezeigt wird, zum Manöverpunkt.

Besonders vorteilhaft an dieser weiteren bevorzugten Ausgestaltung des erfindungsgemäßen Verfahrens ist es, dass durch die ebenfalls kontaktanaloge Abstandsangabe während der Vorbereitung auf das Manöver in der Regel vollständig auf einen Wechsel des Fahrers zwischen kontaktanalogen und statischen Anzeigen verzichtet werden kann, wodurch Ablenkungen verhindert werden und damit die Fahrsicherheit weiter verbessert wird.

In weiterer bevorzugter Ausgestaltung der Erfindung ist eine Vorrichtung für ein wie oben beschriebenes erfindungsgemäßes Verfahren vorgesehen. Diese weist bevorzugt eine zum Empfangen von Daten ausgebildete Eingangsschnittstelle aufweist. Die von der Eingangsschnittstelle empfangenen Daten sind bevorzugt Sensordaten. Die Eingangsschnittstelle empfängt Sensordaten bevorzugt von internen Sensoren des Fahrzeugs. Als interne Sensoren des Fahrzeugs werden Sensoren bezeichnet, die im Fahrzeug fest verbaut sind. Bevorzugt handelt es sich bei von internen Sensoren empfangenen Sensordaten um Daten zur Geschwindigkeit des Fahrzeugs. Ferner bevorzugt handelt es sich um Daten zur Position den Fahrzeugs oder zur Geschwindigkeit des Fahrzeugs, die beispielsweise von einem GPS-Sensor ermittelt werden können. Ferner bevorzugt handelt es sich bei den von der Eingangsschnittstelle empfangenen Daten um Ausgangsdaten von datenverarbeitenden Vorrichtungen des Fahrzeugs. Eine datenverarbeitende Vorrichtung des Fahrzeugs ist eine Vorrichtung, die Sensordaten empfängt und zu Ausgangsdaten verarbeitet. Beispielsweise ist ein Navigationssystem eine datenverarbeitende Vorrichtung des Fahrzeugs. Die Eingangsschnittstelle ist bevorzugt in der Lage, Manöverinformationen zu empfangen, die Art und Ort eines Manövers spezifizieren. Eine Eingabeschnittstelle des Fahrzeugs, mit deren Hilfe der Fahrer Anweisungen eingeben kann, ist ebenfalls eine datenverarbeitende Vorrichtung des Fahrzeugs. Besonders bevorzugt ist die Empfangsschnittstelle der erfindungsgemäßen Vorrichtung dazu ausgebildet, Eingabedaten des Fahrers aus einer Eingabeschnittstelle zu empfangen.

Die erfindungsgemäße Vorrichtung weist außerdem eine zum Bestimmen eines Zielmanövers und eines Manöverpunktes des Zielmanövers, zum Ermitteln zumindest eines ersten Anzeigepunkts mit einem ersten festen Abstand von dem Manöverpunkt und zum Ermitteln zumindest eines zweiten Anzeigepunkts mit einem zweiten festen Abstand von dem Manöverpunkt ausgebildete Steuereinheit auf.

Das Zielmanöver und den Manöverpunkt des Zielmanövers bestimmt die Steuereinheit dabei bevorzugt mit Hilfe der Daten, die das Empfangsmodul empfängt. Bevorzugt ist die Steuereinheit in der Lage, mit Hilfe von empfangenen Positionsdaten des Fahrzeugs und Eingabedaten des Fahrers aus einer Eingabeschnittstelle des Fahrzeugs Navigationsdaten zu berechnen und daraus das Zielmanöver und den Manöverpunkt des Zielmanövers zu bestimmen. Ferner bevorzugt ist die Steuereinheit dazu ausgebildet, aus empfangenen Navigationsdaten von einem Navigationssystem das Zielmanöver und den Manöverpunkt des Zielmanövers zu bestimmen. Ebenfalls bevorzugt ist die Steuereinheit dazu ausgebildet, mittels der Eingangsschnittstelle empfangene Manöverinformationen zu verarbeiten.

Der erste feste Abstand wird von der Steuereinheit mit Hilfe von empfangenen Daten zur Geschwindigkeit des Fahrzeugs und mit Hilfe empfangener Daten zur Position des Fahrzeugs ermittelt. Bei einer hohen Geschwindigkeit wird entsprechend der erste feste Abstand größer, um dem Fahrer genug Zeit zu geben, sich auf das Zielmanöver vorzubereiten. Der erste feste Abstand ist geringer als der Abstand des Fahrzeugs vom Manöverpunkt zum Zeitpunkt der Berechnung des ersten festen Abstandes. Der zweite feste Abstand wird von der Steuereinheit bevorzugt mit Hilfe der Geschwindigkeit des Fahrzeugs und mit Hilfe des ersten festen Abstands bestimmt. Aus der Differenz des ersten festen Abstands und des zweiten festen Abstands bestimmt die Steuereinheit bevorzugt die Distanz zwischen dem ersten Anzeigepunkt und dem zweiten Anzeigepunkt. Diese Distanz wird bevorzugt größer bei einer höheren Geschwindigkeit des Fahrzeugs. Ferner bevorzugt wird der zweite feste Abstand von der Steuereinheit mit Hilfe des ersten festen Abstands und der Position des Fahrzeugs ermittelt. Die Differenz der beiden Abstände, also die Distanz zwischen den beiden Anzeigepunkten, wird bevorzugt kleiner, je kleiner der Abstand der Position des Fahrzeugs zum Manöverpunkt ist. Besonders bevorzugt werden der erste feste Abstand und der zweite feste Abstand von der Steuereinheit mit Hilfe der Geschwindigkeit des Fahrzeugs und der Position des Fahrzeugs bestimmt, wobei der zweite feste Abstand geringer ist als der erste feste Abstand.

Zudem weist die erfindungsgemäße Vorrichtung ein zum Generieren zumindest eines ersten kontaktanalogen Anzeigeelements und zum Generieren zumindest eines zweiten kontaktanalogen Anzeigeelements ausgebildetes Grafikmodul auf.

Bevorzugt werden die kontaktanalogen Anzeigeelemente vom Grafikmodul so generiert, dass sie, wenn sie durch die Augmented-Reality-Display-Vorrichtung angezeigt werden, vom Fahrer des Fahrzeugs als auf dem Fahrweg, insbesondere der von dem Fahrzeug befahrenen Straße, an dem Ort liegend wahrgenommen werden, der durch den jeweiligen Anzeigepunkt definiert ist. Die kontaktanalogen Anzeigeelemente enthalten dabei bevorzugt Navigationsinformationen, die das Zielmanöver beschreiben. Bevorzugt sind die kontaktanalogen Anzeigeelemente jeweils durch zumindest einen Pfeil gegeben, der die Richtung des Zielmanövers angibt und ortsfest auf der Straße zu liegen oder zu stehen scheint. Es sind jedoch auch Variationen des Pfeils in Aussehen, räumlicher Platzierung und Drehung bevorzugt.

Zusätzlich besitzt die erfindungsgemäße Vorrichtung eine zum Ausgeben der Anzeigepunkte und der den Anzeigepunkten zugeordneten kontaktanalogen Anzeigeelemente zur Anzeige durch eine Augmented-Reality-Display-Vorrichtung auf den Anzeigepunkten ausgebildete Ausgangsschnittstelle. Anders ausgedrückt ist die Ausgangsschnittstelle dazu ausgebildet, die durch die Steuereinheit ermittelten Anzeigepunkte und die vom Grafikmodul generierten Anzeigeelemente an die Augmented-Reality-Display-Vorrichtung des Fahrzeugs auszugeben, so dass diese die Anzeigeelemente so ausgibt, dass sie für den Fahrer kontaktanalog auf der Straße an dem Ort der Anzeigepunkte zu liegen scheinen.

In einer bevorzugten Ausgestaltung der erfindungsgemäßen Vorrichtung besitzt diese ein zusammengefasst aus der Eingangsschnittstelle und der Ausgangsschnittstelle bestehendes I/O-Modul.

In der erfindungsgemäßen Vorrichtung ist die Steuereinheit zusätzlich dazu ausgebildet, einen ersten Zeitabschnitt und einen zweiten Zeitabschnitt zu berechnen, und das Ausgabemodul dazu diese auszugeben, so dass die Augmented-Reality-Display-Vorrichtung das erste kontaktanaloge Anzeigeelement in einem ersten Zeitabschnitt und das zweite kontaktanaloge Anzeigeelement in einem zweiten Zeitabschnitt zumindest abschnittsweise nach dem ersten Zeitabschnitt ausgibt. Bevorzugt werden dabei beide Anzeigeelemente gleichzeitig ausgegeben und dann die Ausgabe des ersten Anzeigeelements früher beendet als die des zweiten Anzeigeelements. Ferner bevorzugt wird die Ausgabe des ersten Anzeigeelements zu einem ersten Zeitpunkt gestartet. Zu einem zweiten Zeitpunkt wird die Ausgabe des ersten Anzeigeelements beendet und die Ausgabe des zweiten Anzeigeelements gestartet, die dann zu einem dritten Zeitpunkt beendet wird. Ebenfalls bevorzugt wird zu einem ersten Zeitpunkt die Ausgabe des ersten Anzeigeelements gestartet. Zu einem zweiten Zeitpunkt, der nach dem ersten Zeitpunkt liegt, wird dann die Ausgabe des zweiten Anzeigeelements gestartet. Zu einem dritten Zeitpunkt, der nach dem zweiten Zeitpunkt liegt, wird die Ausgabe des ersten Anzeigeelements beendet und zu einem vierten Zeitpunkt, der nach dem dritten Zeitpunkt liegt, wird die Ausgabe des zweiten Anzeigeelements beendet. Wesentlich ist, dass die Anzeigeelemente zumindest teilweise zeitlich nacheinander angezeigt werden, auch wenn ein gewisser zeitlicher Überlapp der örtlich getrennten Darstellungen möglich ist.

Eine weitere bevorzugte Ausgestaltung der erfindungsgemäßen Vorrichtung sieht vor, dass die Steuereinheit dazu ausgebildet ist, eine Vielzahl von Anzeigepunkten mit jeweiligem festen Abstand vom Manöverpunkt zu ermitteln, und das Grafikmodul dazu ausgebildet ist, zugehörige kontaktanaloge Anzeigeelemente zu generieren, wobei die Anzeigepunkte jeweils eine vorbestimmte Distanz zueinander aufweisen. Mit anderen Worten ist die erfindungsgemäße Vorrichtung in dieser weiteren bevorzugten Ausgestaltung dazu ausgebildet, mehr als zwei Anzeigepunkte mit dazugehörigen Anzeigeelementen zu erzeugen, wobei sich jeder Anzeigepunkt mit einem festen Abstand vom Manöverpunkt im Fahrweg des Fahrzeugs auf der Straße befindet. Somit ist der feste Abstand jedes nachfolgenden Anzeigepunkts (beispielsweise dritter Anzeigepunkt) zum Manöverpunkt kleiner als der feste Abstand des vorangegangenen Anzeigepunkts (beispielsweise zweiter Anzeigepunkt) zum Manöverpunkt. Die festen Abstände der Anzeigepunkte zum Manöverpunkt sind dabei jeweils voneinander verschieden, wodurch sich räumliche Distanzen zwischen den jeweiligen Anzeigepunkten ergeben, die vorbestimmt werden.

In einer ersten bevorzugten Durchführungsform sind die Distanzen zwischen verschiedenen Anzeigepunkten konstant. Beispielsweise werden Anzeigepunkte von der Steuereinheit fortlaufend mit Abständen von 50 m zueinander auf dem Fahrweg des Fahrzeugs ermittelt. Ebenfalls bevorzugt werden die Distanzen zwischen den Anzeigepunkten dabei von der Steuereinheit bevorzugt mit Hilfe der Geschwindigkeit des Fahrzeugs ermittelt. Bei einer hohen Geschwindigkeit werden entsprechend die Distanzen größer, um dem Fahrer genug Zeit zu geben, das nachfolgende Anzeigeelement wahrzunehmen. Somit kann eine Konfusion des Fahrers durch nur kurz auftauchende Anzeigeelemente vermieden werden. Ferner bevorzugt werden die Distanzen von der Steuereinheit mit Hilfe der Position des Fahrzeugs, besonders bevorzugt in Abhängigkeit von dessen Abstand zum Manöverpunkt, ermittelt. Die Distanzen zwischen den Anzeigepunkten sind bevorzugt geringer, wenn der Abstand des Fahrzeugs vom Manöverpunkt zum Zeitpunkt der Berechnung kleiner ist. Besonders bevorzugt werden die Distanzen von der Steuereinheit mit Hilfe der Geschwindigkeit des Fahrzeugs und der Position des Fahrzeugs bestimmt.

In einer weiteren bevorzugten Ausgestaltung der Erfindung ist die Steuereinheit der erfindungsgemäßen Vorrichtung zusätzlich dazu ausgebildet, eine variable Entfernung von Manöverpunkt und Fahrzeug zu ermitteln und für jedes Anzeigeelement einen Projektionswinkel in Abhängigkeit der ermittelten variablen Entfernung und des jeweiligen festen Abstands zum Manöverpunkt zu ermitteln. Der Projektionswinkel wird dabei von der Steuereinheit bevorzugt so ermittelt, dass das Anzeigeelement ortsfest auf dem Anzeigepunkt mit festem Abstand zum Manöverpunkt angezeigt wird, sprich als ein variabler Projektionswinkel.

Die variable Entfernung ist dabei die Entfernung des Fahrzeugs vom Manöverpunkt, die aufgrund der Bewegung des Fahrzeugs variabel ist, also von der Geschwindigkeit des Fahrzeugs abhängt. Bevorzugt wird die variable Entfernung des Fahrzeugs von der Steuereinheit in dieser bevorzugten Ausgestaltung der Erfindung anhand zumindest einer Position und einer Geschwindigkeit des Fahrzeugs ermittelt. Die Position des Fahrzeugs wird dabei von der Steuereinheit bevorzugt durch Sensordaten direkt ermittelt. Ferner bevorzugt wird die Position des Fahrzeugs durch Sensordaten und relativ zu zumindest einer anderen Position von der Steuereinheit ermittelt. Wird die Position durch Sensordaten direkt ermittelt, so wird sie bevorzugt mit Hilfe von GPS-Daten ermittelt. Wird die Position relativ zu zumindest einer anderen Position ermittelt, so wird sie bevorzugt mit Hilfe von empfangenen Daten eines Abstandssensors ermittelt. Bevorzugt beinhaltet ein Abstandssensor einen Laser. Die zumindest eine andere Position, aufgrund derer die Position des Fahrzeugs relativ ermittelt wird, ist bevorzugt der Manöverpunkt, der Anzeigepunkt oder ein fester Abstand eines Anzeigepunktes. Die andere Position kann auch eine Markierung des Manöverpunktes, wie beispielsweise ein Straßenschild, sein.

Der Projektionswinkel ist der Winkel, den die Augmented-Reality-Display-Vorrichtung des Fahrzeugs einstellt, um das jeweilige kontaktanaloge Anzeigeelement aus Sicht des Fahrers auf den entsprechenden Anzeigepunkt zu projizieren. Der Projektionswinkel wird von der Steuereinheit bevorzugt mit Hilfe der Entfernung des Fahrzeugs vom jeweiligen Anzeigepunkt ermittelt, die sich aus der variablen Entfernung und dem festen Abstand des jeweiligen Anzeigepunktes vom Manöverpunkt ergibt. Ferner bevorzugt fließt zusätzlich die Höhe der Augmented-Reality-Display-Vorrichtung über der Straße mit in die Berechnung des Projektionswinkels durch die Steuereinheit ein. Es sind jedoch auch andere Lösungen denkbar, mit denen die Steuereinheit den Projektionswinkel ermittelt.

In dieser weiteren bevorzugten Ausgestaltung der erfindungsgemäßen Vorrichtung ist die Steuereinheit ferner bevorzugt dazu ausgebildet, für jedes Anzeigeelement einen ersten Grenzwinkel und einen zweiten Grenzwinkel zu bestimmen, und die Ausgabeschnittstelle dazu ausgebildet, diese an die Augmented-Reality-Display-Vorrichtung auszugeben, so dass diese jedes Anzeigeelement mit einem Projektionswinkel gleich einem ersten vorbestimmten Grenzwinkel einblendet und mit einem Projektionswinkel gleich einem zweiten vorbestimmten Grenzwinkel ausblendet. Bevorzugt sind dabei jedem Anzeigeelement ein erster vorbestimmter Grenzwinkel und ein zweiter vorbestimmter Grenzwinkel zugeordnet. Besonders bevorzugt unterscheiden sich die Grenzwinkel eines Anzeigeelements von denen anderer Anzeigeelemente. Ferner bevorzugt besitzt jedes Anzeigeelement dieselben vorbestimmten Grenzwinkel.

In weiterer bevorzugter Ausgestaltung der erfindungsgemäßen Vorrichtung ist vorgesehen, dass das Grafikmodul ferner dazu ausgebildet ist, zu jedem Anzeigeelement zusätzlich eine dem jeweiligen festen Abstand zum Manöverpunkt zugeordnete Abstandsangabe zu generieren. Die Abstandsangabe wird dabei bevorzugt wie auch das zugeordnete Anzeigeelement als kontaktanalog generiert. Mit anderen Worten wird die generierte Abstandsangabe nach dem Ausgeben durch die Ausgabeschnittstelle der erfindungsgemäßen Vorrichtung von der Augmented-Reality-Display-Vorrichtung so angezeigt, dass der Fahrer des Fahrzeugs sie als auf der Straße im Fahrweg des Fahrzeugs neben dem jeweiligen Anzeigeelement liegend oder stehend wahrnimmt. Die Abstandsangabe ist dabei bevorzugt eine numerische Angabe, die dem festen Abstand des dem zugeordneten Anzeigeelement zugehörigen Anzeigepunktes zum Manöverpunkt entspricht und von der Steuereinheit ermittelt wird.

Bevorzugt wird die Abstandsangabe von der Steuereinheit als eine Längenangabe ermittelt. Ferner bevorzugt enthält die Abstandsangabe eine von der Steuereinheit ermittelte Angabe, die dem jeweiligen festen Abstand zum Manöverpunkt zugeordnet werden kann. Eine solche Angabe ist bevorzugt ein Teil eines Count-Downs. Beispielsweise wird bevorzugt durch die Steuereinheit dem kleinsten festen Abstand zum Manöverpunkt eine 1, dem nächstgrößeren eine 2, und so weiter, zugeordnet. Wurde die Abstandsangabe als eine Längenangabe ermittelt, so entspricht diese bevorzugt der variablen Entfernung des Fahrzeugs zum Manöverpunkt. Besonders bevorzugt ist die Längenangabe der jeweilige feste Abstand des Anzeigepunktes, an dem die Abstandsangabe zusammen mit dem ihr zugeordneten Anzeigeelement angezeigt werden soll, zum Manöverpunkt.

Ein weiterer Aspekt der vorliegenden Erfindung betrifft ferner ein Fahrzeug, aufweisend eine Augmented-Reality-Display-Vorrichtung und eine erfindungsgemäße Vorrichtung für das erfindungsgemäße Verfahren, jeweils wie oben beschrieben.

Ein weiterer Aspekt der Erfindung betrifft ein computerlesbares Speichermedium, umfassend Befehle, die bei der Ausführung durch einen Computer, insbesondere durch eine Steuereinheit einer erfindungsgemäßen Vorrichtung eines erfindungsgemäßen Fahrzeugs, jeweils wie vorstehend beschrieben, diesen veranlassen, ein erfindungsgemäßes Verfahren, wie vorstehend beschrieben, auszuführen. Das Speichermedium ist dabei bevorzugt ein flüchtiger Speicher, beispielsweise RAM, oder ein nicht-flüchtiger Speicher, beispielsweise Flash.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein schematisches Ablaufdiagramm eines erfindungsgemäßen Verfahrens und einer bevorzugten Ausgestaltung des erfindungsgemäßen Verfahrens;
- Figur 2: eine schematische Darstellung eines erfindungsgemäßen Fahrzeugs und einer erfindungsgemäßen Vorrichtung zum Durchführen des erfindungsgemäßen Verfahrens;
- Figur 3: eine Ansicht einer Verkehrssituation eines erfindungsgemäßen Fahrzeugs von oben;
- Figur 4: eine Seitenansicht einer Verkehrssituation eines erfindungsgemäßen Fahrzeugs und
- Figur 5: eine Verkehrssituation aus Sicht eines Fahrers eines erfindungsgemäßen Fahrzeugs zu verschiedenen Zeitpunkten.

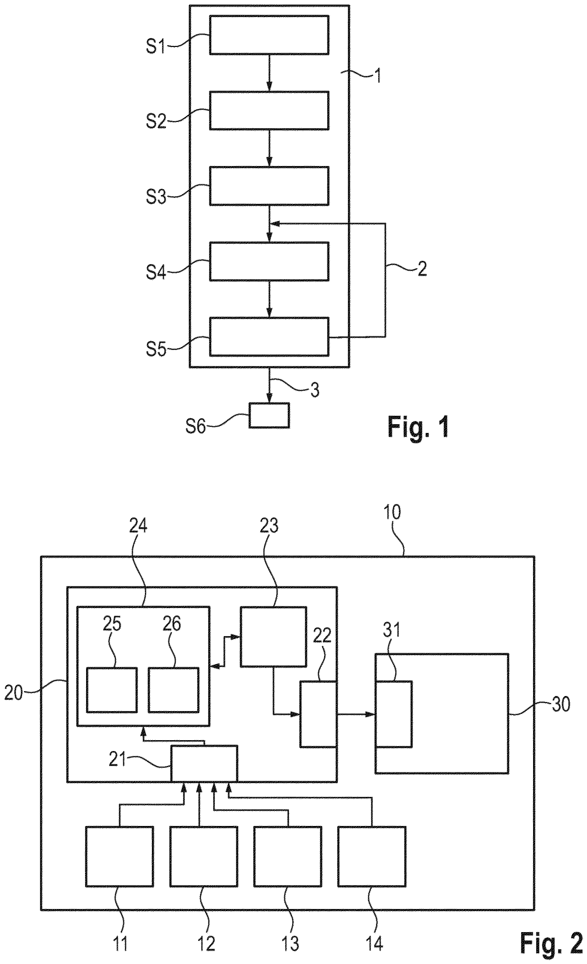

Figur 1 zeigt ein schematisches Ablaufdiagramm eines erfindungsgemäßen Verfahrens 1. In einem ersten Schritt S1 erfolgt ein Bestimmen eines Zielmanövers eines Fahrzeugs und eines Manöverpunktes, an dem das Zielmanöver stattfinden soll. Daraufhin folgt ein zweiter Schritt S2 des erfindungsgemäßen Verfahrens, in dem ein erster Anzeigepunkt ermittelt wird, der sich im Fahrweg des Fahrzeugs auf der vom Fahrzeug befahrenen Straße befindet und einen festen Abstand von dem Manöverpunkt hat. Der dritte Schritt S3 des erfindungsgemäßen Verfahrens umfasst ein Generieren eines ersten kontaktanalogen Anzeigeelements, welches dann an eine Augmented-Reality-Display-Vorrichtung des Fahrzeugs ausgegeben wird, die es auf dem ersten Anzeigepunkt, der im zweiten Schritt S2 ermittelt wurde, anzeigt. Der Fahrer nimmt das kontaktanaloge Anzeigeelement dann so wahr, als würde es am ersten Anzeigepunkt auf der Straße liegen. Im vierten Schritt S4 wird ein zweiter Anzeigepunkt ermittelt, der sich ebenfalls auf der Straße im Fahrweg des Fahrzeugs befindet und einen zweiten festen Abstand von dem Manöverpunkt hat. Der zweite feste Abstand ist dabei geringer als der erste feste Abstand. Im fünften Schritt S5 des erfindungsgemäßen Verfahrens wird dann ein zweites kontaktanaloges Anzeigeelement generiert, was ebenfalls an die Augmented-Reality-Display-Vorrichtung ausgegeben wird, so dass diese es auf dem zweiten Anzeigepunkt, der im vierten Schritt S4 ermittelt wurde, anzeigt.

Das schematische Ablaufdiagramm des erfindungsgemäßen Verfahrens 1 wird in Figur 1 ergänzt, um eine bevorzugte Ausführungsform des erfindungsgemäßen Verfahrens schematisch darzustellen. In dieser bevorzugten Ausführungsform ist es vorgesehen, mehr als zwei Anzeigepunkte mit dazugehörigen Anzeigeelementen zu ermitteln, zu generieren und auszugeben. Nach dem fünften Schritt des erfindungsgemäßen Verfahrens S5 wird deshalb ermittelt, ob der Manöverpunkt vom Fahrzeug bereits erreicht wurde. Ist das nicht der Fall, so werden die Schritte S4 und S5 wiederholt. Es wird also im Schritt S4 ein weiterer Anzeigepunkt ermittelt und im Schritt S5 ein dazugehöriges weiteres Anzeigeelement generiert und ausgegeben. Dies ist in Figur 1 mit der ersten Auswahlmöglichkeit 2 dargestellt. Erreicht das Fahrzeug den Manöverpunkt nach einer eventuellen Vielzahl von Wiederholungen der Schritte S4 und S5, so wird die andere Auswahlmöglichkeit 3 gewählt und der Schritt S6 ausgeführt, der die bevorzugte Ausführungsform des erfindungsgemäßen Verfahrens beendet.

Figur 2 zeigt eine schematische Darstellung eines erfindungsgemäßen Fahrzeugs 10 und einer erfindungsgemäßen Vorrichtung 20 zum Durchführen des erfindungsgemäßen Verfahrens 1 gemäß der vorliegenden Erfindung. Das Fahrzeug 10 besitzt neben der erfindungsgemäßen Vorrichtung 20 eine Augmented-Reality-Display-Vorrichtung 30 zum Anzeigen kontaktanaloger Informationen. Die Augmented-Reality-Display-Vorrichtung 30 besitzt wiederum ein Steuergerät 31. Das Fahrzeug 10 weist außerdem eine Mehrzahl von Sensoren 11, 12 auf, deren Sensordaten die erfindungsgemäße Vorrichtung 20 empfangen kann. Es handelt sich dabei um interne Sensoren 11, 12. Der Sensor 11 ist beispielsweise ein Tachometer und der Sensor 12 ein GPS-Sensor. Weiterhin besitzt das Fahrzeug 10 eine Mehrzahl datenverarbeitender Vorrichtungen 13, 14, deren Ausgangsdaten ebenfalls von der erfindungsgemäßen Vorrichtung 20 empfangen werden. Die datenverarbeitende Vorrichtung 13 entspricht dabei beispielsweise einem Navigationssystem und die datenverarbeitende Vorrichtung 14 einer Eingabeschnittstelle.

Die Vorrichtung 20, die in Figur 2 dargestellt ist, weist erfindungsgemäß eine Eingangsschnittstelle 21 auf, die zum Empfangen von Daten von den Sensoren 11, 12 und den datenverarbeitenden Vorrichtungen 13, 14 ausgebildet ist. Die empfangenen Daten sendet die Eingangsschnittstelle 21 an die erfindungsgemäße Steuereinheit 24, die einen internen Speicher 25 und eine CPU 26 besitzt.

Die Steuereinheit 24 ist erfindungsgemäß dazu ausgebildet, ein Zielmanöver und einen Manöverpunkt des Zielmanövers zu bestimmen, wie im Verfahrensschritt S1 vorgesehen. Dazu verarbeitet die CPU 26 beispielsweise Navigationsinformationen, die die Eingangsschnittstelle 21 von dem Navigationssystem 13 empfangen hat. Alternativ verarbeitet die CPU 26 Daten der Eingangsschnittstelle und des GPS-Sensors und ermittelt mit Hilfe von Kartendaten, die auf dem internen Speicher 25 gesichert sind, das Zielmanöver und den Manöverpunkt des Zielmanövers. Weiterhin ist die erfindungsgemäße Steuereinheit 24 zum Ermitteln der Anzeigepunkte und ihrer festen Abstände vom Manöverpunkt ausgebildet, wozu sie die Sensordaten des GPS-Sensors und des Tachometers verarbeitet, um die Anzeigepunkte aufgrund der Position des Fahrzeugs und der Geschwindigkeit des Fahrzeugs zu ermitteln.

Die erfindungsgemäße Vorrichtung 20 weist außerdem erfindungsgemäß ein Grafikmodul 23 auf, das zum Generieren von kontaktanalogen Anzeigeelementen auf ihren jeweiligen Anzeigepunkten ausgebildet ist. Das Grafikmodul 23 ist deshalb in der Lage, mit der Steuereinheit 24 zu kommunizieren. Die auf ihren jeweiligen Anzeigepunkten generierten Anzeigeelemente sendet das Grafikmodul 23 an die erfindungsgemäße Ausgangsschnittstelle 22. Die Ausgangsschnittstelle 22 ist erfindungsgemäß dazu ausgebildet, die Anzeigepunkte und die den Anzeigepunkten zugeordneten Anzeigeelemente an die Augmented-Reality-Display-Vorrichtung 30 auszugeben, damit diese sie anzeigen kann. Dazu kommuniziert die Ausgangsschnittstelle mit dem Steuergerät 31 der Augmented-Reality-Display-Vorrichtung 30.

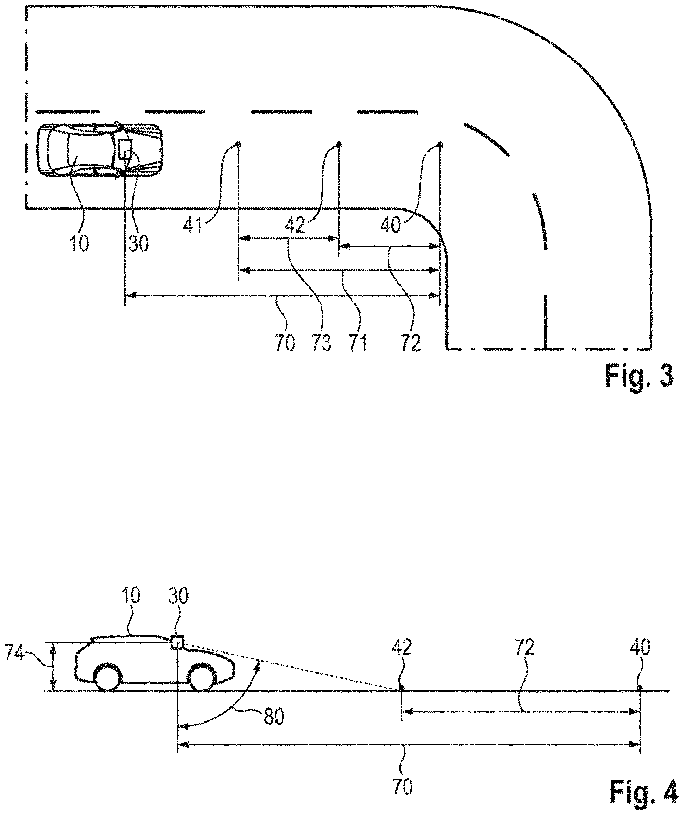

Anhand der Figuren 3, 4 und 5 wird die vorliegende Erfindung mit beispielhaft dargestellten Anwendungsfällen des erfindungsgemäßen Verfahrens verdeutlicht.

In Figur 3 ist eine Ansicht einer Verkehrssituation eines erfindungsgemäßen Fahrzeugs 10 von oben dargestellt. Das erfindungsgemäße Fahrzeug 10 befindet sich hier auf einer Straße und fährt auf eine Rechtskurve zu. Im ersten Schritt des erfindungsgemäßen Verfahrens S1 wird also das Zielmanöver des Fahrzeugs 10 als eine Abbiegung nach rechts bestimmt, die das Fahrzeug 10 ausführen muss, um an der Stelle in die Kurve zu fahren, an der sich der Manöverpunkt 40 des Zielmanövers befindet. Das Fahrzeug 10 befindet sich in der dargestellten Verkehrssituation in einer variablen Entfernung 70 von dem Manöverpunkt 40, wobei die Entfernung, wie hier dargestellt ist, von der Augmented-Reality-Display-Vorrichtung 30 aus gemessen wird. Auf der Straße im Fahrweg des Fahrzeugs liegend sind die im zweiten und vierten Schritt S2 und S4 des erfindungsgemäßen Verfahrens ermittelten Anzeigepunkte 41, 42 dargestellt. Der erste feste Abstand 71 des ersten Anzeigepunktes 41 vom Manöverpunkt 40 ist größer als der zweite feste Abstand 72 des zweiten Anzeigepunktes 42, was zu einer Distanz 73 zwischen den Anzeigepunkten führt, die sich aus den beiden Abständen 71, 72 ergibt.

Figur 4 zeigt eine Verkehrssituation eines erfindungsgemäßen Fahrzeugs 10 als Seitenansicht. In dem hier dargestellten Fall hat das Fahrzeug 10, das erfindungsgemäß eine Augmented-Reality-Display-Vorrichtung 30 aufweist, bereits den ersten Anzeigepunkt 41 überfahren. Auf der Straße zwischen dem Manöverpunkt 40 und dem Fahrzeug 10 befindet sich deshalb nur der zweite Anzeigepunkt 42 in einem Abstand 72 von dem Manöverpunkt 40. Die Augmented-Reality-Display-Vorrichtung 30 stellt, um das zweite kontaktanaloge Anzeigeelement so anzuzeigen, dass es vom Fahrer des Fahrzeugs als auf dem zweiten Anzeigepunkt 42 liegend wahrgenommen wird, einen Projektionswinkel 80 ein. Der Projektionswinkel 80 ist variabel, denn er hängt von der Geschwindigkeit des Fahrzeugs 10 und damit von der variablen Entfernung 70 des Fahrzeugs 10 von dem Manöverpunkt 40 ab. Außerdem fließt die Höhe 74 der Augmented-Reality-Display-Vorrichtung 30 über der Straße mit in die Berechnung des Projektionswinkels ein. In Figur 4 ist erkennbar, dass sich der Projektionswinkel aus dem Arkustangens des Verhältnisses von der Differenz von der variabler Entfernung 70 und dem festen Abstand 72 und der Höhe 74 ergibt.

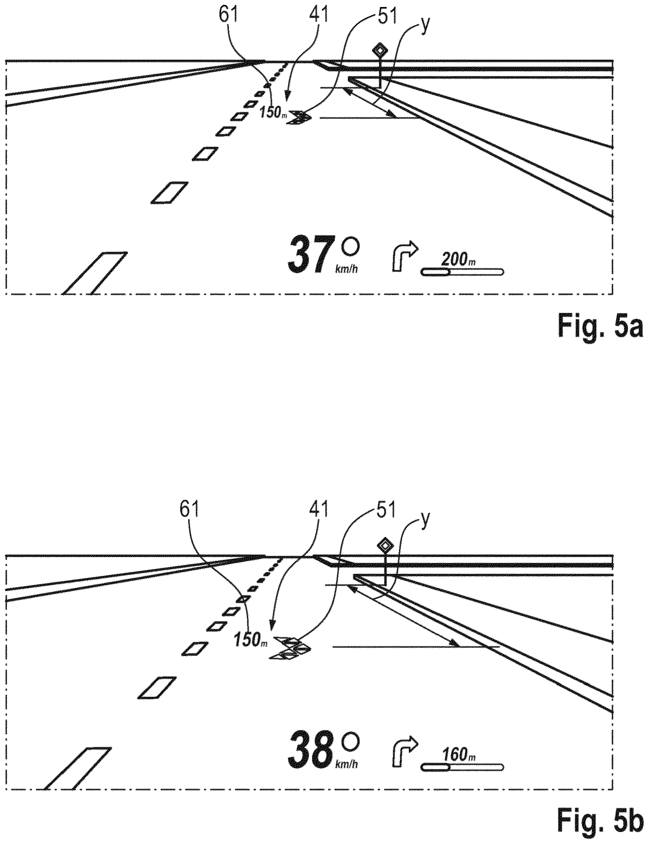

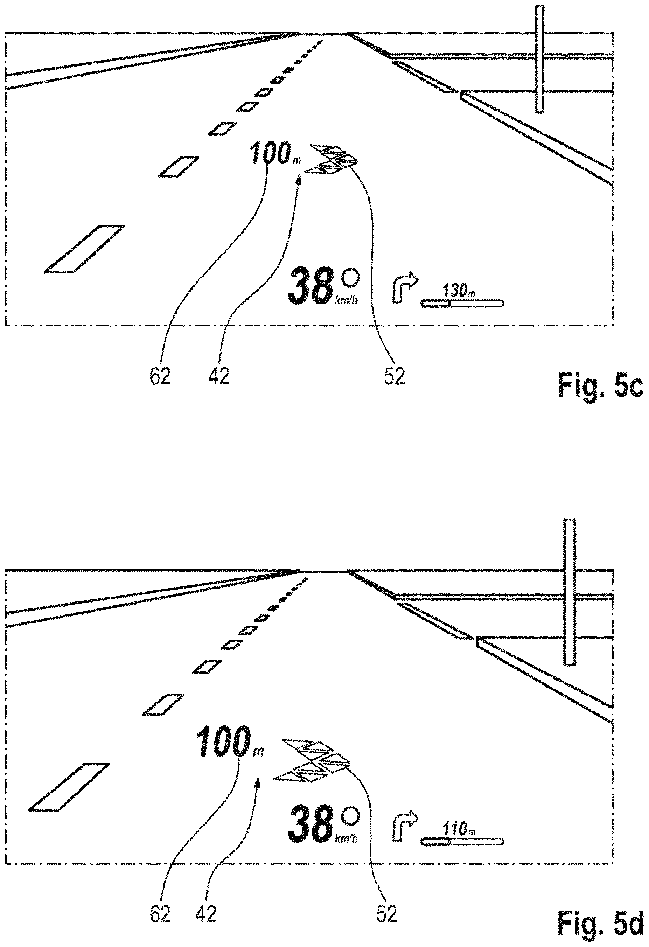

Figur 5 besteht aus vier Teilen, die mit a, b, c und d bezeichnet sind. Jede der Teilfiguren stellt eine Verkehrssituation aus Sicht eines Fahrers eines erfindungsgemäßen Fahrzeugs 10 dar, wobei alle dieselbe Verkehrssituation, jedoch jeweils zu einem anderen Zeitpunkt darstellen.

Figur 5a zeigt die Sicht eines Fahrers eines erfindungsgemäßen Fahrzeugs 10 auf eine Straße, an der in 200 m Entfernung das Zielmanöver durchgeführt werden soll, welches bereits in Schritt S1 des erfindungsgemäßen Verfahrens als Abbiegen nach rechts bestimmt wurde. Im Fahrweg des Fahrzeugs 10 werden ein erstes Anzeigeelement 51 und eine erste Abstandsangabe 61 angezeigt, die auf der Straße zu liegen scheinen. Das Anzeigeelement 51 ist durch einen Pfeil nach rechts gegeben, der die Richtung des Zielmanövers angibt. Der Pfeil ist nicht permanent gezeichnet, sondern besteht aus mehreren Polygonen, zwischen denen die Straße sichtbar wird, was vorteilhaft einer eventuellen Verdeckung verkehrsrelevanter Informationen durch das Anzeigeelement vorbeugt. Die Abstandsangabe 61 zeigt "150 m" an, was der Länge des ersten festen Abstands 71 vom ersten Anzeigepunkt 41 zu dem Manöverpunkt 40 entspricht. In anderen bevorzugten Ausführungsformen des erfindungsgemäßen Verfahrens kann die Abstandsangabe auch so generiert werden, dass sie der Länge der variablen Entfernung 70 vom Fahrzeug 10 zu dem Manöverpunkt 40 entspricht oder einen Teil eines Count-Downs anzeigt.

In Figur 5b wird aus Sicht des Fahrers dieselbe Verkehrssituation wie in Figur 5a zu einem späteren Zeitpunkt gezeigt, an dem sich das Fahrzeug 10 bereits näher an dem Manöverpunkt befindet. Das erste Anzeigeelement 51 und die erste Abstandsangabe 61 scheinen weiterhin ortsfest am ersten Anzeigepunkt auf der Straße zu liegen, dazu werden sie nun größer und niedriger im Sichtfeld dargestellt, was zu diesem perspektivischen Eindruck führt.

Um zu verdeutlichen, dass das erste Anzeigeelement 51 und die erste Abstandsangabe 61 ortsfest am ersten Anzeigepunkt 41 angezeigt werden, ist sowohl in Figur 5a als auch in Figur 5b der Abstand y vom ersten Anzeigepunkt zu einem Vorfahrtsschild eingezeichnet. Dieser Abstand bleibt wegen der ortsfesten Anzeige des kontaktanalogen Anzeigeelements 51 und der kontaktanalogen Abstandsangabe 61 gleich, während sich das erfindungsgemäße Fahrzeug 10 vorwärts bewegt. Der Abstand y wirkt deshalb in Figur 5b größer, da sich das Fahrzeug 10 nun näher am Anzeigepunkt befindet.

In der nächsten Figur 5c ist das Sichtfeld des Fahrers, nachdem sich das Fahrzeug 10 weiter als in Figur 5b auf den Manöverpunkt 40 zubewegt hat, zu sehen. Das erste Anzeigeelement 51 und die erste Abstandsangabe 61 sind nun nicht mehr zu sehen, da das Fahrzeug 10 diese bereits überfahren hat. Stattdessen sind nun das zweite Anzeigeelement 52 und die zweite Abstandsangabe 62 sichtbar, die wieder ortsfest auf der Straße im Fahrweg des Fahrzeuges 10 zu liegen scheinen. Die zweite Abstandsangabe 62 zeigt die Länge des zweiten festen Abstands 72 zwischen dem zweiten Anzeigepunkt 42, an dem sich das zweite Anzeigeelement 52 und die zweite Abstandsangabe 62 zu befinden scheinen, und den Manöverpunkt an. Diese Länge beträgt jetzt nur noch "100 m", da erfindungsgemäß der zweite feste Abstand 72 geringer als der erste feste Abstand 71 ist. Deutlich wird hier noch einmal der von der Erfindung vorteilhaft erzeugte Check-Point-Effekt der Anzeigeelemente 51, 52. Das Fahrzeug 10 hat nun den ersten Anzeigepunkt 41 überfahren, weshalb die Sicht des Fahrers auf den zweiten Anzeigepunkt 42 mit dem zweiten Anzeigeelement 52 fällt, er hat also das Gefühl, nachdem er den ersten Check-Point überfahren hat, auf den zweiten Check-Point zuzufahren. In der hier dargestellten Ausführungsform des erfindungsgemäßen Verfahrens wird das zweite Anzeigeelement 52 und damit auch die zweite Abstandsangabe 62 zu dem Zeitpunkt eingeblendet, an dem das erste Anzeigeelement 51 und damit auch die erste Abstandsangabe 61 ausgeblendet werden.

Figur 5d zeigt das Sichtfeld des Fahrers, nachdem sich das Fahrzeug wiederum weiter auf den Manöverpunkt zubewegt hat. Das zweite Anzeigeelement 52 und die zweite Abstandsangabe 62 scheinen weiterhin ortsfest am zweiten Anzeigepunkt 42 zu liegen. Dieser Eindruck wird durch die Vergrößerung des kontaktanalogen zweiten Anzeigeelements 52 und der kontaktanalogen zweiten Abstandsangabe 62 erzeugt und dadurch, dass die beiden kontaktanalogen Anzeigen 52, 62 nun niedriger im Sichtfeld angezeigt werden.

### Bezugszeichenliste

- S1: Verfahrensschritt 1
- S2: Verfahrensschritt 2
- S3: Verfahrensschritt 3
- S4: Verfahrensschritt 4
- S5: Verfahrensschritt 5
- S6: Ende

- 1: Verfahren
- 2: Auswahlmöglichkeit
- 3: Auswahlmöglichkeit
- 10: Fahrzeug
- 11: Tachometer
- 12: GPS-Sensor
- 13: Navigationssystem
- 14: Eingabeschnittstelle
- 20: Vorrichtung
- 21: Eingangsschnittstelle
- 22: Ausgangsschnittstelle
- 23: Grafikmodul
- 24: Steuereinheit
- 25: interner Speicher
- 26: CPU
- 30: Augmented-Reality-Display-Vorrichtung
- 31: Steuergerät
- 40: Manöverpunkt
- 41: erster Anzeigepunkt
- 42: zweiter Anzeigepunkt
- 51: erstes Anzeigeelement
- 52: zweites Anzeigeelement
- 61: erste Abstandsangabe
- 62: zweite Abstandsangabe
- 70: variable Entfernung
- 71: erster fester Abstand
- 72: zweiter fester Abstand
- 73: Distanz
- 74: Höhe
- 80: Projektionswinkel

- y: Abstand

## Patentansprüche

1. Verfahren (1) zum Vorbereiten eines Navigationsmanövers eines Fahrzeugs (10) durch Steuerung einer kontaktanalogen Anzeige von Navigationsinformationen einer Augmented-Reality-Display-Vorrichtung (30), aufweisend die Schritte:
| | |
|---|---|
| (S1) | Bestimmen eines Zielmanövers und eines Manöverpunktes (40) des Zielmanövers; |
| (S2) | Ermitteln eines ersten Anzeigepunkts (41) mit einem ersten festen Abstand (71) von dem Manöverpunkt (40) auf einem von dem Fahrzeug (10) befahrenen Fahrweg und zwischen einer aktuellen Fahrzeugposition und dem Manöverpunkt; |
| (S3) | Generieren und Ausgeben eines ersten kontaktanalogen Anzeigeelements (51) zur Anzeige auf dem ersten Anzeigepunkt (41) durch die Augmented-Reality-Display-Vorrichtung (30); |
| (S4) | Ermitteln eines zweiten Anzeigepunkts (42) mit einem zweiten festen Abstand (72) von dem Manöverpunkt (40) auf dem von dem Fahrzeug (10) befahrenen Fahrweg und zwischen der aktuellen Fahrzeugposition und dem Manöverpunkt; und |
| (S5) | Generieren und Ausgeben eines zweiten kontaktanalogen Anzeigeelements (52) zur Anzeige auf dem zweiten Anzeigepunkt (42) durch die Augmented-Reality-Display-Vorrichtung (30); |
wobei der erste feste Abstand (71) basierend auf einer Position und einer Geschwindigkeit des Fahrzeugs (10) ermittelt wird, wobei bei einer hohen Geschwindigkeit der erste feste Abstand größer bestimmt wird als bei einer geringeren Geschwindigkeit, und wobei der zweite feste Abstand (72) geringer ist als der erste feste Abstand (71)
und wobei das erste Anzeigeelement (51) in einem ersten Zeitabschnitt und das zweite Anzeigeelement (52) in einem zweiten Zeitabschnitt abschnittsweise nach dem ersten Zeitabschnitt ausgegeben werden.

2. Verfahren (1) nach Anspruch 1, wobei eine Vielzahl von mehr als zwei Anzeigepunkten (41, 42) mit jeweiligem festen Abstand (71, 72) vom Manöverpunkt (40) ermittelt und zugehörige kontaktanaloge Anzeigeelemente (51, 52) generiert und ausgegeben werden, wobei die Anzeigepunkte (41, 42) jeweils eine vorbestimmte Distanz (73) zueinander aufweisen.

3. Verfahren (1) nach einem der vorangehenden Ansprüche, ferner aufweisend:
Ermitteln einer variablen Entfernung (70) von Manöverpunkt (40) und Fahrzeug (10); und
Ermitteln, für jedes Anzeigeelement (51, 52), eines Projektionswinkels (80) in Abhängigkeit der ermittelten Entfernung (70) und des jeweiligen festen Abstands (41, 42) zum Manöverpunkt (40).

4. Verfahren (1) nach Anspruch 3, wobei die variable Entfernung (70) des Fahrzeugs (10) anhand zumindest einer Position und einer Geschwindigkeit des Fahrzeugs (10) ermittelt wird.

5. Verfahren (1) nach Anspruch 3 oder 4, wobei jedes Anzeigeelement (51, 52) mit einem Projektionswinkel (80) gleich einem ersten vorbestimmten Grenzwinkel eingeblendet und mit einem Projektionswinkel (80) gleich einem zweiten vorbestimmten Grenzwinkel ausgeblendet wird.

6. Verfahren (1) nach einem der vorangehenden Ansprüche, wobei für jedes Anzeigeelement (51, 52) eine dem jeweiligen festen Abstand (71, 72) zum Manöverpunkt (40) zugeordnete Abstandsangabe (61, 62) ausgegeben wird.

7. Vorrichtung (20), welche dazu ausgebildet ist, das Verfahren (1) nach einem der Ansprüche 1 bis 6 auszuführen, aufweisend:
eine zum Bestimmen des Zielmanövers und des Manöverpunktes (40) des Zielmanövers und zum Ermitteln zumindest des ersten Anzeigepunkts (41) und des zweiten Anzeigepunkts (42) ausgebildete Steuereinheit (24); und
ein zum Generieren zumindest des ersten kontaktanalogen Anzeigeelements (51) und des zweiten kontaktanalogen Anzeigeelements (52) ausgebildetes Grafikmodul (23); und
eine zum Ausgeben der Anzeigepunkte (41, 42) und der den Anzeigepunkten (41, 42) zugeordneten kontaktanalogen Anzeigeelemente (51, 52) zur Anzeige durch eine Augmented-Reality-Display-Vorrichtung (30) auf den Anzeigepunkten (41, 42) ausgebildete Ausgangsschnittstelle (22).

8. Fahrzeug (10) aufweisend eine zum Anzeigen kontaktanaloger Anzeigeelemente eingerichtete Augmented-Reality-Display-Vorrichtung (30) und eine Vorrichtung (20) nach Anspruch 7.

9. Computerlesbares Speichermedium, umfassend Befehle, die bei der Ausführung durch einen Computer diesen veranlassen, das Verfahren (1) nach einem der Ansprüche 1 bis 6 auszuführen.

## Claims

1. Method (1) for preparing for a navigation manoeuvre of a vehicle (10) by controlling a contact analogue display of navigation information by an augmented reality display device (30), comprising the steps of:
| | |
|---|---|
| (51) | determining a target manoeuvre and a manoeuvre point (40) of the target manoeuvre; |
| (S2) | determining a first display point (41) with a first fixed spacing (71) from the manoeuvre point (40) on a road used by the vehicle (10) and between a current vehicle position and the manoeuvre point; |
| (S3) | generating and outputting a first contact analogue display element (51) for display at the first display point (41) by the augmented reality display device (30); |
| (S4) | determining a second display point (42) with a second fixed spacing (72) from the manoeuvre point (40) on the road used by the vehicle (10) and between the current vehicle position and the manoeuvre point; and |
| (S5) | generating and outputting a second contact analogue display element (52) for display at the second display point (42) by the augmented reality display device (30); |
wherein the first fixed spacing (71) is determined on the basis of a position and a speed of the vehicle (10), wherein the first fixed spacing is determined to be greater at a high speed than at a lower speed, and wherein the second fixed spacing (72) is shorter than the first fixed spacing (71),
and wherein the first display element (51) is output in a first period of time and sections of the second display element (52) are output in a second period of time after the first period of time.

2. Method (1) according to Claim 1, wherein a multiplicity of more than two display points (41, 42) with a respective fixed spacing (71, 72) from the manoeuvre point (40) are determined and associated contact analogue display elements (51, 52) are generated and output, wherein the display points (41, 42) are each at a predetermined distance (73) from one another.

3. Method (1) according to one of the preceding claims, also comprising:
determining a variable distance (70) between the manoeuvre point (40) and the vehicle (10); and
determining, for each display element (51, 52), a projection angle (80) on the basis of the determined distance (70) and the respective fixed spacing (41, 42) from the manoeuvre point (40).

4. Method (1) according to Claim 3, wherein the variable distance (70) of the vehicle (10) is determined on the basis of at least a position and a speed of the vehicle (10).

5. Method (1) according to Claim 3 or 4, wherein each display element (51, 52) is displayed with a projection angle (80) equal to a first predetermined limit angle and is hidden with a projection angle (80) equal to a second predetermined limit angle.

6. Method (1) according to one of the preceding claims, wherein a spacing indication (61, 62) associated with the respective fixed spacing (71, 72) from the manoeuvre point (40) is output for each display element (51, 52).

7. Device (20) which is designed to carry out the method (1) according to one of Claims 1 to 6, having:
a control unit (24) designed to determine the target manoeuvre and the manoeuvre point (40) of the target manoeuvre and to determine at least the first display point (41) and the second display point (42); and
a graphics module (23) designed to generate at least the first contact analogue display element (51) and the second contact analogue display element (52); and
an output interface (22) designed to output the display points (41, 42) and the contact analogue display elements (51, 52) associated with the display points (41, 42) for display by an augmented reality display device (30) at the display points (41, 42) .

8. Vehicle (10) having an augmented reality display device (30) configured to display contact analogue display elements and a device (20) according to Claim 7.

9. Computer-readable storage medium comprising instructions which, when executed by a computer, cause the latter to carry out the method (1) according to one of Claims 1 to 6.

## Revendications

1. Procédé (1) permettant de préparer une manoeuvre de navigation d'un véhicule (10) en commandant un affichage à contact analogique d'informations de navigation d'un dispositif d'affichage à réalité augmentée (30), présentant les étapes consistant à :
(51) déterminer une manoeuvre cible et un point de manoeuvre (40) de la manoeuvre cible ;
(52) établir un premier point d'affichage (41) à un premier espacement fixe (71) par rapport au point de manoeuvre (40) sur un trajet parcouru par le véhicule (10) et entre une position de véhicule actuelle et le point de manoeuvre ;
(S3) générer et émettre un premier élément d'affichage à contact analogique (51) à afficher sur le premier point d'affichage (41) par le dispositif d'affichage à réalité augmentée (30) ;
(S4) établir un deuxième point d'affichage (42) à un deuxième espacement fixe (72) par rapport au point de manoeuvre (40) sur le trajet parcouru par le véhicule (10) et entre la position de véhicule actuelle et le point de manoeuvre ; et
(S5) générer et émettre un deuxième élément d'affichage à contact analogique (52) à afficher sur le deuxième point d'affichage (42) par le dispositif d'affichage à réalité augmentée (30) ;
dans lequel le premier espacement fixe (71) est établi sur la base d'une position et d'une vitesse du véhicule (10), dans lequel le premier espacement fixe est déterminé plus grand à haute vitesse qu'à vitesse plus réduite, et dans lequel le deuxième espacement fixe (72) est inférieur au premier espacement fixe (71),
et dans lequel le premier élément d'affichage (51) est émis dans une première tranche de temps et le deuxième élément d'affichage (52) est émis dans une deuxième tranche de temps par tranches après la première tranche de temps.

2. Procédé (1) selon la revendication 1, dans lequel une pluralité de plus de deux points d'affichage (41, 42) à un espacement fixe (71, 72) respectif du point de manoeuvre (40) est établie, et des éléments d'affichage à contact analogique (51, 52) associés sont générés et émis, les points d'affichage (41, 42) présentant respectivement un écartement prédéterminé (73) les uns par rapport aux autres.

3. Procédé (1) selon l'une quelconque des revendications précédentes, présentant en outre les étapes consistant à :
établir une distance variable (70) entre le point de manoeuvre (40) et le véhicule (10) ; et
établir pour chaque élément d'affichage (51, 52) un angle de projection (80) en fonction de la distance établie (70) et de l'espacement fixe (41, 42) respectif par rapport au point de manoeuvre (40).

4. Procédé (1) selon la revendication 3, dans lequel la distance variable (70) du véhicule (10) est établie à l'aide d'au moins une position et d'une vitesse du véhicule (10).

5. Procédé (1) selon la revendication 3 ou 4, dans lequel chaque élément d'affichage (51, 52) est superposé avec un angle de projection (80) égal à un premier angle limite prédéterminé, et est masqué avec un angle de projection (80) égal à un deuxième angle limite prédéterminé.

6. Procédé (1) selon l'une quelconque des revendications précédentes, dans lequel une indication d'espacement (61, 62) associée à l'espacement fixe (71, 72) respectif par rapport au point de manoeuvre (40) est émise pour chaque élément d'affichage (51, 52).

7. Dispositif (20), réalisé pour exécuter le procédé (1) selon l'une quelconque des revendications 1 à 6, présentant :
une unité de commande (24) réalisée pour déterminer la manoeuvre cible et le point de manoeuvre (40) de la manoeuvre cible et pour établir au moins le premier point d'affichage (41) et le deuxième point d'affichage (42) ; et
un module graphique (23) réalisé pour générer au moins le premier élément d'affichage à contact analogique (51) et le deuxième élément d'affichage à contact analogique (52) ; et
une interface de sortie (22) réalisée pour émettre les points d'affichage (41, 42) et les éléments d'affichage à contact analogique (51, 52) associés aux point d'affichage (41, 42) à afficher par un dispositif d'affichage à réalité augmentée (30) sur les points d'affichage (41, 42).

8. Véhicule (10), présentant un dispositif d'affichage à réalité augmentée (30) conçu pour afficher des éléments d'affichage à contact analogique et un dispositif (20) selon la revendication 7.

9. Support de stockage lisible par ordinateur, comprenant des instructions qui, lorsqu'elles sont exécutées par un ordinateur, font que celui-ci exécute le procédé (1) selon l'une quelconque des revendications 1 à 6.
